# EUROPEAN PATENT SPECIFICATION

(11) **EP 0 466 430 B1**
(45) Date of publication and mention of the grant of the patent: **03.01.1996**
(21) Application number: 91306169.3
(22) Date of filing: 08.07.1991
(51) Int. Cl.: G02F 1/295

(54) **Optical waveguide switch for two wavelengths**
Optischer Wellenleiterschalter für zwei Wellenlängen
Commutateur de guide d'onde optique pour deux longueurs d'ondes

(30) Priority: 06.07.1990 JP 177350/90; 31.08.1990 JP 228043/90
(43) Date of publication of application: 15.01.1992
(73) Proprietor: NEC CORPORATION, Tokyo (JP)
(72) Inventor: Tanisawa, Yasuhisa, Minato-ku, Tokyo 108-01 (JP)
(74) Representative: Abnett, Richard Charles

(56) References cited:
- EP-A- 0 296 247
- EP-A- 0 436 346
- WO-A-86/01907
- US-A- 4 674 829
- IEEE JOURNAL OF QUANTUM ELECTRONICS, vol. QE-22, no. 6,June 1986, pp 933-938, New York, US; J.J. VESELKA et al.: "Optimization of Ti:LiNbO3 Optical Waveguides and Directional Coupler Switches for 1.56 Müm Wavelenght"
- JOURNAL OF LIGHTWAVE TECHNOLOGY, vol. 6, no. 6, June 1988, pp 946-952, New York, NY, US; F. ROTTMANN et al.: "Integrated-Optic Wavelenght Multiplexers on Lithium Niobate Based on Two-Mode Interference"

## Description

### FIELD OF THE INVENTION

This invention relates to an optical waveguide device, and more particularly to an optical waveguide device which functions as an optical switch for selectively switching lights having different wavelengths.

### BACKGROUND OF THE INVENTION

An optical waveguide device is a device for modulating the phase or intensity of light or for switching the optical path of light by changing the index of refraction of a waveguide included therein. In such an optical waveguide device, a waveguide having a high index of refraction is formed in a ferroelectric or semiconductor substrate to confine light propagated therethrough, and electrodes for applying a voltage are formed on or in the vicinity of the waveguide. In operation, a predetermined voltage is applied to the electrodes to change the index of refraction of the waveguide, so that the light which propagates therethrough is modulated in phase or intensity. In the same manner, an optical path is changed over among a plurality of waveguides.

One type of conventional optical waveguide device includes a substrate consisting of lithium niobium oxide (LiNbO₃ ) which is a ferroelectric material having strong electro-optical effects, first and second waveguides consisting of Ti-diffused regions formed in the substrate, and first and second electrodes formed above the waveguides over an insulation, respectively. The first and second waveguides have parallel portions of predetermined length close to each other, separated by a predetermined gap.

In operation, when there is no voltage applied across the electrodes, there occurs a so-called mode coupling between the close portions of the two waveguides, so that some proportion of a light signal crosses from the first waveguide to the second waveguide at the close portions, and some proportion of a light signal crosses from the second waveguide to the first waveguide. If the length of the close portions of the waveguides is selected adequately, almost 100 % of the light crosses from one waveguide to the other at the close portions thereof. Such a state is defined as a cross-over state hereinafter.

When, a predetermined voltage is applied to the electrodes, there is generated an electric field, so that the index of refraction of the substrate changes due to the electro-optical effects of the substrate, and the coupling state of the close portions of the waveguides changes. If the voltage thus applied is selected to be adequate, no mode coupling occurs, so that light supplied to the first and second waveguides pass straight through the respective waveguides. Such a state is defined as a straight-through or bar state hereinafter.

In the conventional optical waveguide device, however, there is a disadvantage in that the operation state thereof is not stable, varying in dependance on the polarization of a supplied light. This is an obstacle to development of optical switches.

One approach to constructing an optical directional coupler switch which is independent of the polarisation mode of the light to be switched is described in European patent application No. 0436346A, which is a prior not prepublished application designating Germany, France and the U.K. This application describes a switch for switching light of a predetermined wavelength, comprising first, second and third waveguides formed on a substrate. The waveguides have adjacent waveguide portions forming first and second optical directional coupler switches, linking the first and second waveguides and the second and third waveguides respectively. The interaction length of the first switch is slightly greater than the optimum length for switching light of the predetermined wavelength and the interaction length of the second switch slightly less than this optimum length. Electrodes allow control voltages to be applied to the switches to establish first and second states of the device in which polarised light of the predetermined wavelength is propagated across the device through the two switches with higher and lower transmission efficiencies respectively, where in the first state the transmission efficiency is substantially independent of the polarisation eigenstate of the light.

The device specifically described in EP 0436346A is intended for use with light of wavelength 1300nm but due to its construction using tapered directional couplers of interaction lengths respectively slightly greater than and less than an optimum length for switching light of this wavelength, bias voltages can be applied to the electrodes of the switches to allow acceptable switching of light having a predetermined wavelength in the range from 1290 nm to 1310 nm.

Next, a second, known directional-coupler-type optical switch which is independent of polarization of light will be explained. In the directional-coupler-type optical switch, a density of a Ti diffused waveguide region is controlled to have the same value over a complete coupling length of the switch in both TE mode and TM mode by adjusting a thickness of a Ti layer provided on a substrate prior to the Ti-diffusion.

There has been developed an optical switch having a stable operation performance independent of polarization for light having a wavelength of 1.3 µm. On the other hand, it is possible theoretically to realize the polarization-independence of a switch in which the complete coupling length thereof has the same value in both TE mode and TM mode for light of wavelength 1.55 µm by adjusting the thickness of the Ti layer.

However, conditions of optical confinement in the waveguide are different for light having different wavelengths at the same Ti density of the waveguide, so that conditions for fabricating an optical switch in which the complete coupling length has the same value in both TE mode and TM mode are different for light having wavelengths of 1.3 µm and 1.55 µm. Therefore, it is difficult to form optical switches, one for light of wavelength 1.3 µm and the other for light of wavelength 1.55 µm, in the same substrate by the same fabricating process.

Therefore, a conventional optical switch includes a first switching element for light of 1.3 µm and a second switching element for light of 1.55 µm formed in different substrates, respectively. Such an optical switch has a disadvantageously high fabrication cost, because the switching elements must be formed in different substrates.

### SUMMARY OF THE INVENTION

The invention provides an optical waveguide device as defined in the appendant independent claim to which reference should now be made. Preferred features of the invention are defined in dependent subclaims.

Accordingly, in a preferred embodiment the invention may provide an optical waveguide device, in which optical signals having different wavelengths are switched selectively, which is of a small size and has an advantage in cost.

Advantageously the optical waveguide device of the invention may comprise a plurality of optical directional coupler switches on the substrate, of which at least first and second switches operate independently of polarisation on light of first and second wavelengths respectively. More than two switches may thus be provided in total on the substrate.

### BRIEF DESCRIPTION OF THE DRAWINGS

The invention will be explained in more detail in conjunction with appended drawings wherein:
Fig. 1 is a schematic plan view illustrating a conventional directional coupler type switching element;
Fig. 2 is a cross-sectional view of the conventional directional coupler type switching element taken partly across a line A-A of Fig. 1;
Fig. 3 is a schematic plan view illustrating a conventional optical waveguide device for an optical signal having a wavelength λ₁ ;
Fig. 4 is a schematic plan view illustrating a conventional optical waveguide device for an optical signal having a wavelength λ₂ ;
Fig. 5 is a block diagram illustrating an OTDR in which the conventional optical waveguide devices of Figs. 4 and 5 are used;
Fig. 6 is a schematic plan view illustrating an optical waveguide device in a first preferred embodiment according to the invention;
Fig. 7 is a graph showing a relation between thickness of Ti layer and complete coupling length in TE and TM modes in a directional coupler type switching element of the optical waveguide device for an optical signal of wavelength 1.3 µm;
Fig. 8 is a graph showing a relation between thickness of Ti layer and complete coupling length in both TE and TM modes in the directional coupler type switching element of the optical waveguide device for an optical signal of wavelength 1.55 µm;
Fig. 9 is a graph showing the relation between the width of the waveguide and the thickness of Ti layer of the directional coupler type switching element on condition that the complete coupling lengths in both TE and TM modes are equal;
Fig. 10 is a graph showing switching characteristics of the optical waveguide device at wavelengths of 1.3 µm and 1.55 µm in the first preferred embodiment according to the invention;
Fig. 11 is a block diagram illustrating an OTDR in which the optical waveguide device of Fig. 6 is used;
Fig. 12 is a schematic plan view illustrating an optical waveguide device in a second preferred embodiment according to the invention;
Fig. 13 is a switching chart of an optical waveguide switch in respect of wavelengths of 1.3 µm and 1.55 µm;
Fig. 14 is a graph showing switching characteristics of the optical waveguide switch in respect of wavelengths of 1.3 µm and 1.55 µm; and
Fig. 15 is a block diagram illustrating an OTDR in which the optical waveguide device of Fig. 12 is used.

### DESCRIPTION OF THE PREFERRED EMBODIMENTS

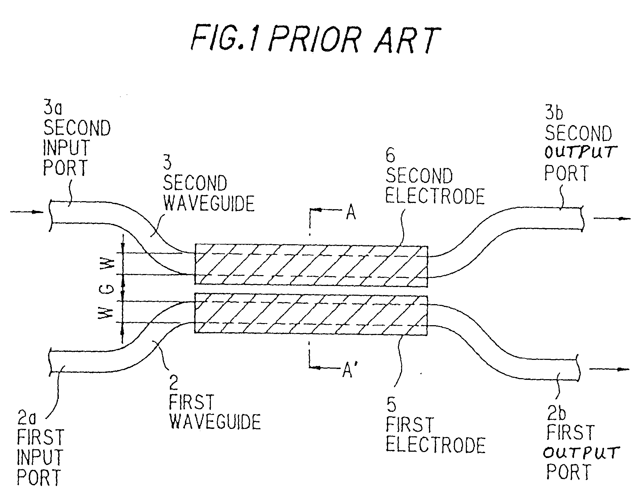

Before describing an optical waveguide device in preferred embodiments according to the invention, the conventional directional coupler type switching element and the conventional optical waveguide device described before will be explained in conjunction with Figs. 1 to 5.

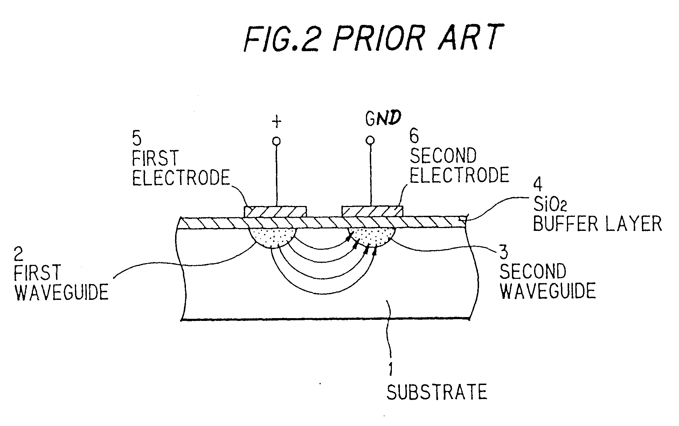

The conventional directional coupler type switching element will be explained in conjunction with Figs. 1 and 2.

The conventional directional coupler type switching element includes a substrate 1 consisting of LiNbO₃ which has relatively strong electro-optical effects among ferroelectric materials, first and second waveguides 2 and 3 consisting of Ti-diffused regions formed in the substrate 1 in the vicinity of the surface thereof, an SiO₂ buffer layer 4 covering the surface of the substrate 1, and first and second electrodes 5 and 6 of metal formed over the SiO₂ buffer layer 4 above the waveguides 2 and 3, respectively. The first and second waveguides 2 and 3 have parallel portions of predetermined length close to each other, separated by a predetermined gap G.

A process for fabricating the directional coupler type switching element will be explained. First, a Ti layer is formed on the substrate of a wafer, and then the Ti layer is patterned to have the pattern of the waveguides. After that, the substrate is heated and held at a high temperature of approximately 1000 °C for a few hours to diffuse Ti into the substrate to form the waveguides therein. Then, the SiO₂ buffer layer is formed to cover the surface of the substrate. Finally, the electrodes are formed over the SiO₂ buffer layer above the waveguides.

The wafer thus fabricated is cut to form a plurality of chips. Each chip is polished at facets. Then, the chip is connected with optical fibers as a directional-coupler-type switching element and the optical axes of the chip and the optical fibers are adjusted to be aligned to each other. Then, the chip is mounted in a package. Finally, electrode pads of the chip and signal terminals provided in the package are connected to each other by wirebonding.

In operation, when there is no voltage applied to the electrodes 5 and 6, mode coupling occurs between the two waveguides 2 and 3 at the close portions, so that some proportion of light supplied to a first input port 2a of the first waveguide 2 crosses from the first waveguide 2 to the second waveguide 3 at the close portions and is outputted from the second output port 3b of the second waveguide 3, while on the other hand, some proportion of light supplied to a second input port 3a of the second waveguide 3 crosses from the second waveguide 3 to the first waveguide 2 at the close portions and is outputted from the first output port 2b of the first waveguide 2. If the length of the close portions of the waveguides 2 and 3 is selected adequately by setting the conditions of the fabrication of the directional-coupler-type optical switch, almost 100 % of the light crosses from one waveguide to the other at the close portions thereof (cross-over state).

When a predetermined voltage is applied to the electrodes 5 and 6, the first electrode 5 being applied with a high level while the second electrode 6 is kept to be a ground level (GND), an electric field is generated in the direction perpendicular to the axes of the waveguides 5 and 6, as shown in Fig. 2, so that the index of refraction of the substrate 1 changes due to the electro-optical effects of the substrate 1, and the coupling state of the close portions of the waveguides 2 and 3 changes. If the voltage thus applied is selected to be adequate, no mode coupling occurs, so that light supplied to the first input port 2a is outputted from the first output port 2b, and light supplied to the second input port 3a is outputted from the second output port 3b (straight-through or bar state).

Such an optical waveguide device has been developed for a matrix optical switch for an optical exchanging system or an optical switch for changing over an optical path of an optical time-domain reflectometer (OTDR), as the switching function described above is integrated on the substrate 1 in the optical waveguide device. Further, it is expected that the optical waveguide device may be realised as an external modulator for large-scale optical communication.

In the conventional optical waveguide device, however, there is a disadvantage in that the operation state thereof is not stable with respect to the polarization of supplied light.

Japanese Patent Provisional Publication (Kokai) No. 1-197724 (published on July 9, 1989) and a report of "Low-drive-voltage and low-loss polarization-independent LiNbO₃ optical waveguide switches", Electronics Letters, vol. 23, No. 21, October 8, 1987 describe a directional-coupler-type optical switch which is independent of polarization of a light. In the directional-coupler-type optical switch, the Ti density of a waveguide region after diffusion is controlled by adjusting the thickness of a Ti layer before diffusion so as to have the same value of complete coupling length of the switch in both TE mode and TM mode. There has been developed an optical switch having a stable operation performance independent of polarization for light having a wavelength of 1.3 µm.

On the other hand, for light having a wavelength of 1.55 µm (which has advantages such as low transmission loss), there is a requirement for an optical switch or an optical modulator for light having a wavelength of 1.55 µm. It is possible theoretically to realize the polarization-independence of the switch in which the complete coupling length has the same value in both TE mode and TM mode by adjusting the thickness of the Ti layer of the waveguide before diffusion.

However, conditions of optical confinement in the waveguide are different for light having different wavelengths at the same Ti density of the waveguide, so that the fabrication conditions of an optical switch in which the complete coupling length has the same value in both TE mode and TM mode are different for light having wavelengths of 1.3 µm and 1.55 µm. Therefore, it is difficult to form optical switches, one for light of wavelength 1.3 µm and the other for light of wavelength 1.55 µm, in the same substrate by the same fabricating process.

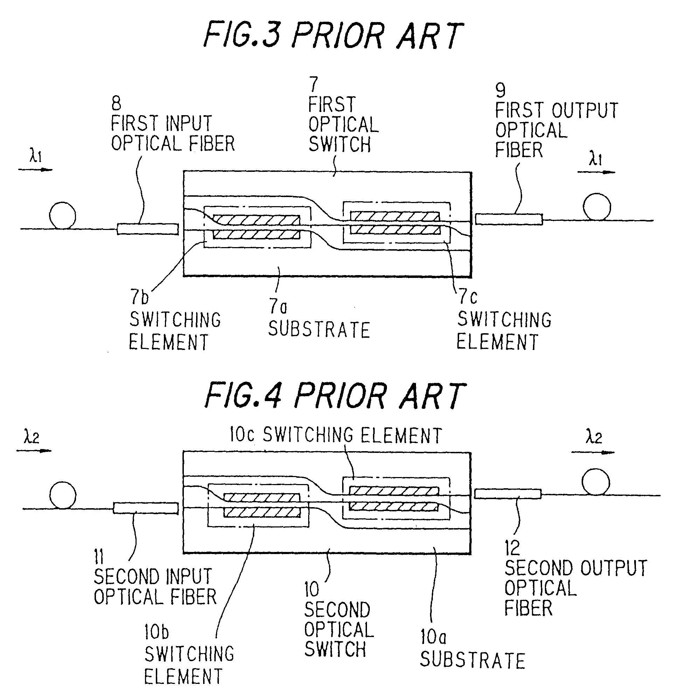

Next, the conventional optical switch will be explained in conjunction with Figs. 3 and 4. In Fig. 3, a first optical switch 7 for light of 1.3 µm includes two switching elements 7b and 7c connected in series formed in a substrate 7a. The switching elements 7b and 7c have a complete coupling length of 19 mm in both TE and TM modes, the fabrication conditions being that the thickness of the Ti layer used to form the waveguides is 470 Å before diffusion, the diffusion process is carried out at 1050°C for 8 hours, the width of the waveguides is 9 µm, and the gap between the waveguides is 9 µm.

On the other hand, in Fig. 4, a second optical switch 10 for light of 1.55 µm wavelength includes two switching elements 10b and 10c connected in series formed in a substrate 10a. The switching elements 10b and 10c have a complete coupling length of 20 mm in both TE and TM modes, the fabrication conditions being that the thickness of the Ti layer used to form the waveguides is 500 Å before diffusion, the width of the waveguides is 10 µm, and the gap between the waveguides is 8 µm. The conditions of the diffusion process are the same as those in the first optical switch.

An OTDR using an electro-optical switch as described above is described in "Low crosstalk and polarization independent Ti : LiNbO₃ Optical waveguide switch for OTDR", Integrated and Guided-Wave Optics, 1988 Technical Digest Series, vol. 5, March 28 to 30, 1988. The OTDR for optical measuring is required to be able to measure light of both 1.3 µm and 1.55 µm, as the range of wavelengths of light to be used in optical comunications widens.

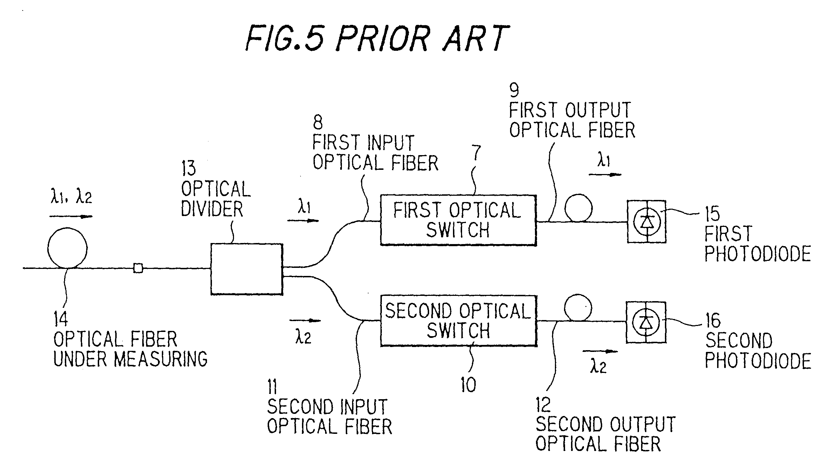

In Fig. 5, the OTDR includes first and second optical switches 7 and 10. An input of an optical divider 13, which divides light into two light signals having different wavelengths, is connected to an optical fiber 14 through which light having a wavelength of λ₁ (=1.3 µm) or λ₂ (=1.55 µm) propagates. Two outputs of the optical divider 13 are connected to first and second input optical fibers 8 and 11. The first input optical fibre 8 leads to an input of the first optical switch 7, which is connected at an output with a first output optical fiber 9 which is connected at the other end to a first photodiode 15. The second input optical fibre 11 leads to an input of the second optical switch 10, which is connected at an output with a second output optical fiber 12 which is connected at the other end to a second photodiode 16.

In operation, either light of wavelength λ₁ (=1.3 µm) or light of wavelength λ₂ (=1.55 µm) is irradiated from a laser diode (not shown) to propagate through the optical fiber 14. The light is divided in the optical divider 13, where the light of wavelength λ₁ is supplied to the first input optical fiber 8, passes through the first optical switch 7 and is then supplied to the first photodiode 15 through the first output optical fiber 9, while the light of wavelength λ₂ is supplied to the second input optical fiber 11, passes through the second optical switch 10 and is then supplied to the second photodiode 16 through the second output optical fiber 12.

Next, an optical waveguide device for a 2-wavelength-type ODTR for light of two wavelengths λ₁ (=1.3 µm) and λ₂ (=1.55 µm) according to a first preferred embodiment of the invention will be explained.

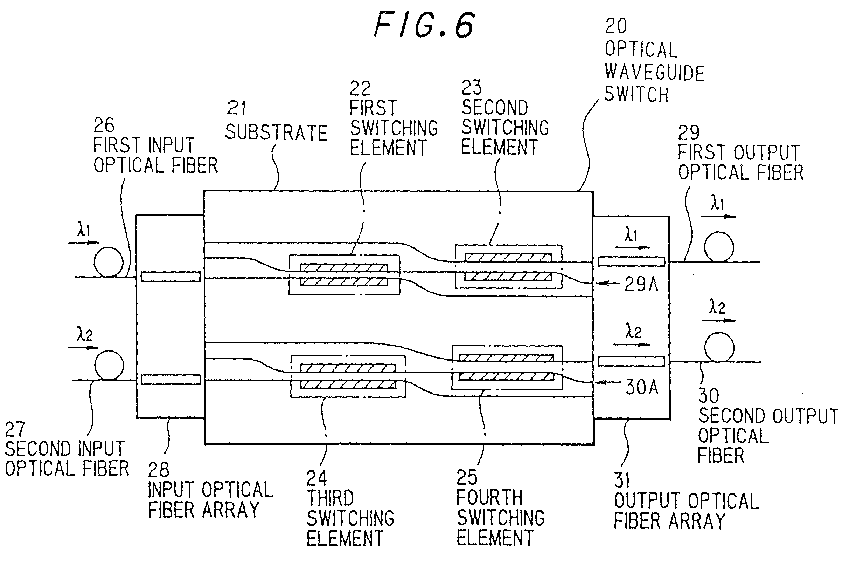

In Fig. 6, the optical waveguide device 20 includes first to fourth switching elements 22 to 25 formed in a substrate 21 consisting of lithium niobate. Two pairs of the switching elements are arranged in parallel, one pair consisting of the first and second switching elements 22 and 23 connected in series and operating for light of wavelength λ₁ (=1.3 µm), and the other pair consisting of the third and fourth switching elements 24 and 25 connected in series and operating for light of wavelength λ₂ (=1.55 µm) in order to increase quenching rate. An input optical fiber array 28 is provided, in which first and second input optical fibers 26 and 27 are connected to the first and third switching elements 22 and 24, respectively. An output optical fiber array 31 is provided, in which first and second output optical fibers 29 and 30 are connected to the second and fourth switching elements 23 and 25, respectively. Both facets of the substrate 21 are polished and fixed to the input and output optical fiber arrays 28 and 31, respectively, the axes of the optical fibers being adjusted to be perpendicular to the facet planes of the substrate 21.

Each of the switching elements includes two waveguides consisting of Ti-diffused regions in the substrate 21 formed by the same process, using conditions of a Ti thickness of 450 Å before diffusion and diffusing at 1050 °C for 8 hours. Each of the first and second switching elements 22 and 23 has a waveguide width W of 9 µm, a gap G between the waveguides of 9 µm, and a complete coupling length L_{c} of 18 mm in both TE mode and TM mode. On the other hand, each of the third and fourth switching elements 24 and 25 has a waveguide width W of 11.5 µm, a gap G of 9.5 µm, and a complete coupling length L_{c} of 22 mm in both TE mode and TM mode.

In operation, light signals having wavelengths λ₁ and λ₂ are switched on and off by controlling a voltage applied across the electrodes to provide CROSS and BAR states as indicated in the following table.

| WAVELENGTH | SWITCHING ELEMENT | | | | SWITCHING STATE |
|---|---|---|---|---|---|
| | 22 | 23 | 24 | 25 | |
| λ₁ | CROSS | CROSS | | | ON |
| | BAR | BAR | | | OFF |
| λ₂ | | | CROSS | CROSS | ON |
| | | | BAR | BAR | OFF |

On the other hand, the light signals having the wavelengths λ₁ and λ₂ may be changed over as indicated in the following table, so that the changed-over light signals are obtained at output terminals 29A and 30A.

| WAVELENGTH | SWITCHING ELEMENT | | | |
|---|---|---|---|---|
| | 22 | 23 | 24 | 25 |
| λ₁ | CROSS | BAR | | |
| λ₂ | | | CROSS | BAR |

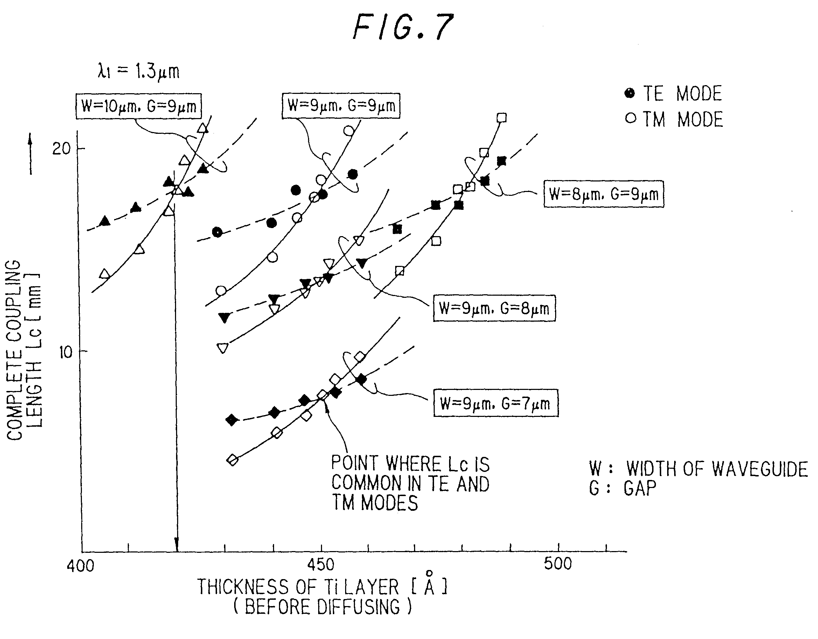

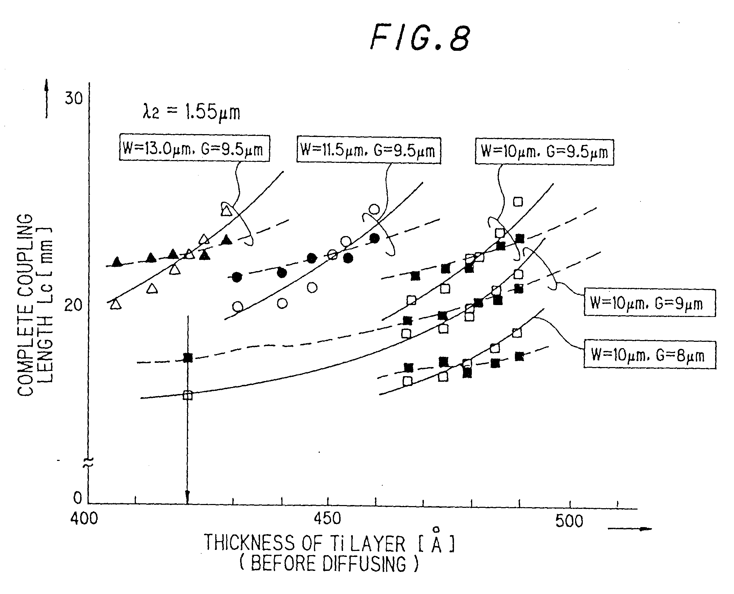

Such a condition is confirmed by the following process. Figs. 7 and 8 respectively show the relation between thickness of Ti layer and complete coupling length L_{c} in TE and TM modes in the switching element for wavelengths of 1.3 µ m and 1.55 µm, respectively. The diffusion of Ti is carried out at 1050 °C for 8 hours in both cases.

As shown in Fig. 7, for the light of wavelength λ₁ (=1.3 µm), if the waveguide width W is fixed to be 9 µm, the complete coupling length L_{c} has the same value in both TE and TM modes if the thickness of Ti layer before diffusion is 450 Å, though the value of the complete coupling length L_{c} depends on the gap G between the waveguides, so that L_{c} is 18 mm at G = 9 µm, 13 mm at G = 8 µm, and 8 mm at G = 7 µm. On the other hand, if the gap G is fixed to be 9 µm, the complete coupling length L_{c} has the same value in both TE and TM modes if the thickness of the Ti layer before diffusion is selected according to the waveguide width W, so that the Ti layer thickness is 420 Å at W = 10 µm, 450 Å at W = 9 µm, and 480 Å at W = 8 µm. The value of the the complete coupling length L_{c} is 20 mm under any of these conditions as long as the gap G is 9 µm.

Next, as shown in Fig. 8, for light of wavelength λ₂ (= 1.55 µm), if the waveguide width W is fixed to be 10 µm, the complete coupling length L_{c} has the same value in both TE and TM modes if the thickness of the Ti layer before diffusion is 480 Å. On the other hand, if the gap G is fixed to be 9.5 µm, the complete coupling length L_{c} has the same value in both TE and TM modes if the thickness of the Ti layer before diffusion is selected according to the waveguide width W, so that the Ti layer thickness is 420 Å at W = 13 µm, 450 Å at W = 11.5 µm, and 480 Å at W = 10 µm.

Thus, the required thickness of the Ti layer can be adjusted in accordance with the waveguide width W so that the complete coupling length L_{c} is the same in both TE and TM modes. However, if the waveguide width W is too narrow, propagation losses may increase even if the Ti layer is thick enough, because optical confinement in the TE mode is not sufficient in such a case. On the other hand, if the Ti layer is too thin, the coupling losses with the optical fiber may increase even if the waveguide width W is wide enough, because the distribution of the Ti concentration in the substrate becomes broad.

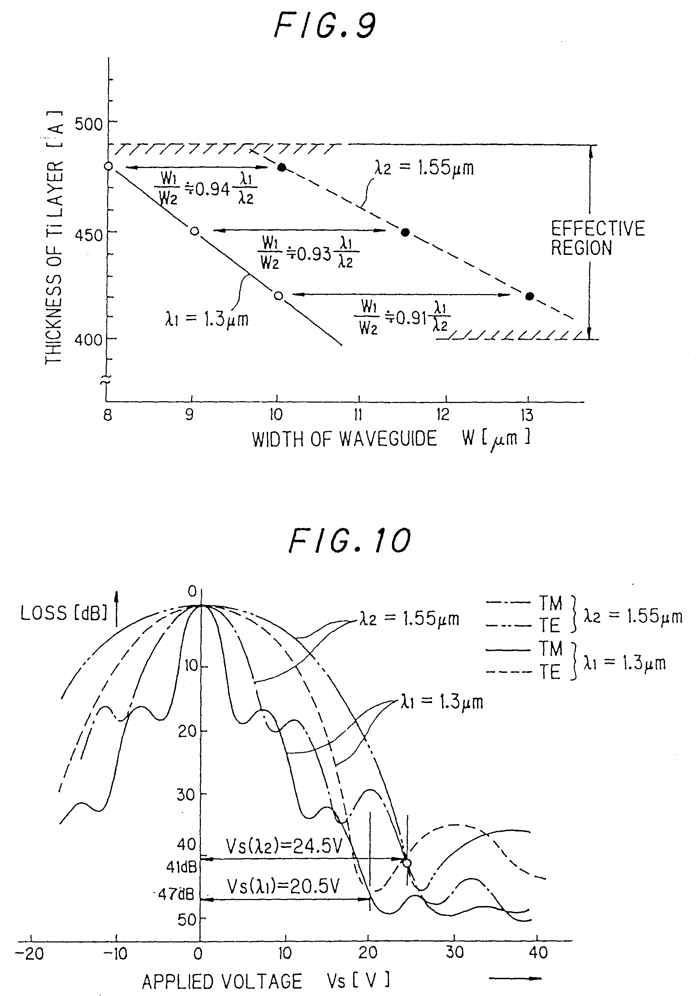

Fig. 9 shows a relation between the waveguide width W and the thickness of the Ti layer before diffusion such that the complete coupling length L_{c} has the same value in both TE and TM modes. The region shown by oblique lines represents an effective region where the waveguide width W and the thickness of the Ti layer are preferable in light of the propagation losses and the coupling losses explained above. As will be clearly seen from figure 9, when λ₁ = 1.3µm and λ₂ = 1.55µm, the ratio of the corresponding waveguide widths is preferably between about 0.91 λ₁/λ₂ and about 0.94 λ₁/λ₂.

Fig. 10 shows switching characteristics of the optical waveguide device. In all of the switching elements of the optical waveguide device, the loss is 0 (in other words, all of the switching elements are in cross-over state) when no voltage is applied to the electrodes. However, the first and second switching elements 22 and 23 are put in the straight-through state in both TE and TM modes when a voltage Vₛ (λ₁) of 20.5 V is applied to the electrodes thereof, and the third and fourth switching elements 24 and 25 are put in the straight-through state in both TE and TM modes when a voltage Vₛ (λ₂) of 24.5 V is applied to the electrodes thereof.

The complete coupling length L_{c} may be selected in accordance with the waveguide width W as described before, and the voltage required for changing the state of the switching element from the cross-over state to the straight-through state increases if the complete coupling length becomes short, so that it is possible to arrange that all the switching elements change state at the same voltage level.

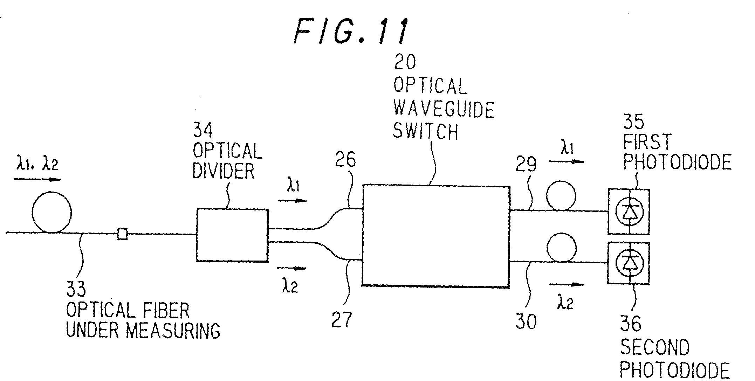

Next, a 2-wavelength type OTDR using the optical waveguide device 20 will be described in conjunction with Fig. 11. In the OTDR, the inputs of the optical waveguide switch 20 are connected to an optical divider 34 through first and second input optical fibers 26 and 27, and the outputs of the switch 20 are connected to first and second photodiodes 35 and 36 through first and second output optical fibers 29 and 30. The optical divider 34 is connected with an optical fiber 33 through which light having a wavelength of λ₁ (=1.3 µm) or λ₂ (=1.55 µm) propagates.

In operation, to measure characteristics of the optical fibre 33, either light of wavelength λ₁ (=1.3 µm) or light of wavelength λ₂ (=1.55 µm) is irradiated from a laser diode (not shown) to the optical fiber 33. The light which reaches the optical divider 34 is divided therein, so that light of wavelength λ₁ is supplied to the first input optical fiber 26, passes through the first and second switching elements 22 and 23 and is then supplied to the first photodiode 35 through the first output optical fiber 29, while light of wavelength λ₂ is supplied to the second input optical fiber 27, passes through the third and fourth switching elements 24 and 25 and is then supplied to the second photodiode 36 through the second output optical fiber 30. A light reflecting from junctions, connections, or broken points of the optical fiber 33 under test is cut off by the optical waveguide switch 20, so that any increase of the region in which measurement is impossible due to saturation of the photodiodes 35 and 36 is avoided.

Next, an optical waveguide device for a 2 wavelength-type OTDR for measurements using light of 2 wavelengths of λ₁ (=1.3 µm) and λ₂ (=1.55 µm) according to a second preferred embodiment of the invention will be explained.

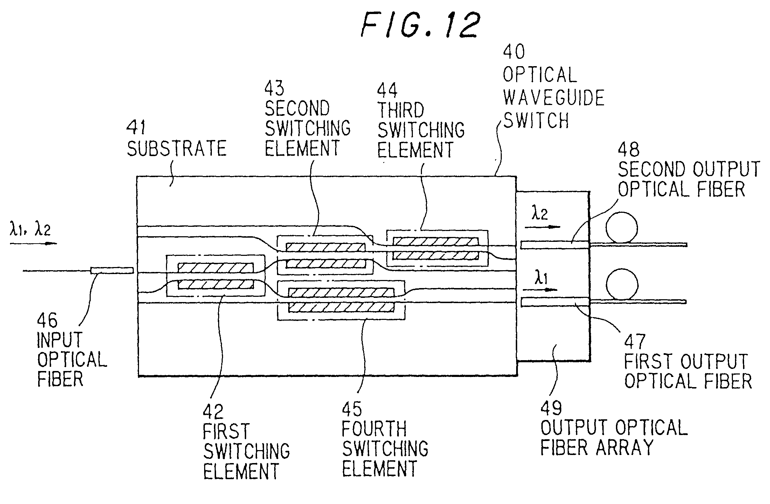

In Fig. 12, the optical waveguide device 40 includes first to fourth switching elements 42 to 45 formed in a substrate 41 consisting of lithium niobate. The first switching element 42 is connected at an input to an input optical fiber 46. The outputs of the two waveguides of the first switching element are each connected to an input of a respective one of the waveguides of the second and fourth switching elements 43 and 45. The fourth switching element 45 is connected at an output to a first output optical fiber 47. The second and third switching elements 43 and 44 are connected in series, and the third switching element 44 is connected at an output to a second output optical fiber 48.

All of waveguides of the switching elements 42 to 45 are formed by forming Ti layers having a thickness of 420 Å and diffusing at 1050 °C for 8 hours. The first and fourth switching elements 42 and 45, each of which functions as a switch for light of wavelength λ₁ (= 1.3 µm), have a waveguide width W of 10 µm, a gap G between the waveguides of 9 µm, and a complete coupling length L_{c} in both TE and TM modes of 18 mm. On the other hand, the second and third switching elements 43 and 44, each of which functions as a switch for light of wavelength λ₂ (= 1.55 µm), have a waveguide width W of 13 µm, a gap G of 8 µm, and a complete coupling length L_{c} of 15 mm.

Next, operation of the first switching element 42, which functions as a wavelength filter, will be explained. A directional coupler which enters the cross-over state when light of wavelength 1.3 µm is supplied thereto and enters the straight-through state when light of wavelength 1.55 µm is supplied thereto may be adopted as a wavelength filter. However, there is no condition in which the directional coupler enters the cross-over state when light of wavelength 1,3 µm is supplied thereto in both TE and TM modes and enters the straight-through state when light of wavelength 1.55 µm is supplied thereto in both TE and TM modes, so that a highly polarization-independent performance cannot be obtained using the directional coupler. Therefore, a switching element is used as a wavelength filter.

When no voltage is applied to electrodes of the first switching element 42, it is in the cross-over state, so that light of wavelength 1.3 µm supplied thereto is transmitted to the fourth switching element 45 and is outputted to the first output optical fiber 47. In this condition, however, the confinement of light of wavelength 1.55 µm is not sufficient, so that the complete coupling length L_{c} has different values in TE and TM modes specifically, it is 15 mm in TE mode and 13 mm in TM mode, as shown in Fig. 8.

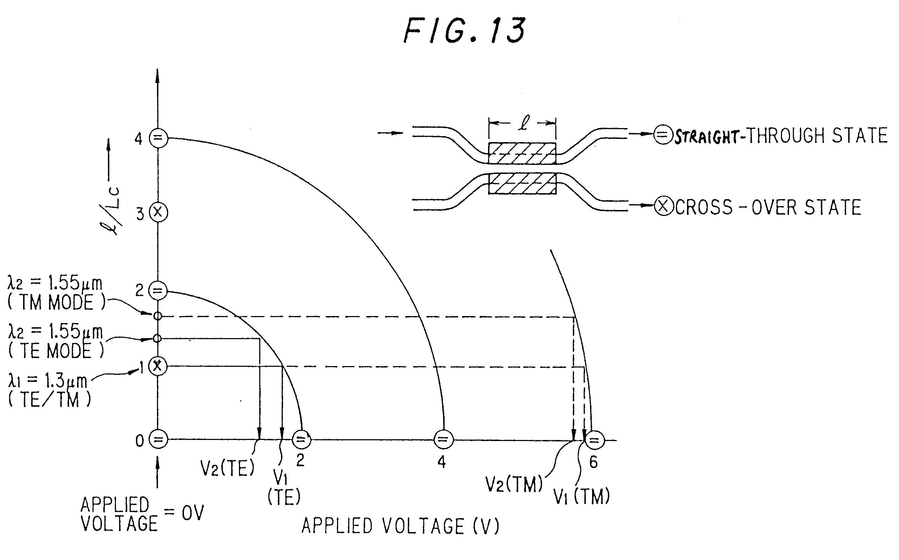

Fig. 13 is a switching chart of the first switching element 42. In a state where no voltage is applied to the electrodes (corresponding to the state on the vertical axis in Fig. 13), the first switching element 42 is in the cross-over state for light of wavelength 1.3 µm in both TE and TM modes. On the other hand, the first switching element 42 is nearly in the straight-through state for light of wavelength 1.55 µm in both TE and TM modes, so that the first switching element 42 enters the straight-through state on applying a relatively low voltage compared with the case of changing the state from a complete cross-over state.

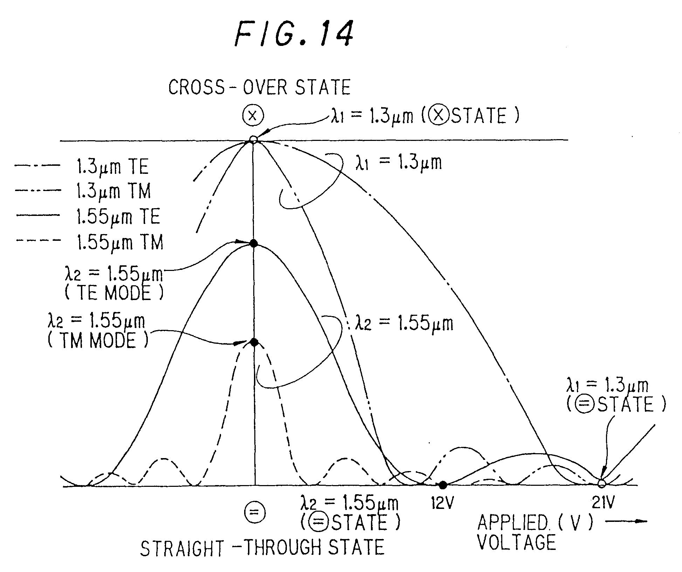

Fig. 14 shows switching characteristics of the first switching element 42. The first switching element 42 enters the straight-through state for light of wavelength 1.55 µm on applying a voltage of 12 V and in case of a light 1.3 µm on applying a voltage of 21 V.

Thus, the first switching element 42 operates as a wavelength filter if a predetermined voltage is applied. In practice, light of wavelength 1.3 µm supplied to the first switching element 42 is supplied to the fourth switching element 45 if no voltage is applied, while light of wavelength 1.55 µm supplied thereto is supplied to the second switching element 43 if a voltage of 12 V is applied.

Next, operation of the optical waveguide device will be explained. For light of wavelength 1.3 µm, the optical waveguide device enters an ON state if no voltage is applied to the first and fourth switching elements 42 and 45 and enters an OFF state on applying a voltage of 21 V thereto. On the other hand, for light of wavelength 1.55 µm, the optical waveguide device enters the ON state on applying a voltage of 12 V to the first switching element 42 and no voltage to the second and third switching elements 43 and 44, and enters the OFF state on applying no voltage to the first switching element 42 and a voltage of 21 V to the second and third switching elements 43 and 44.

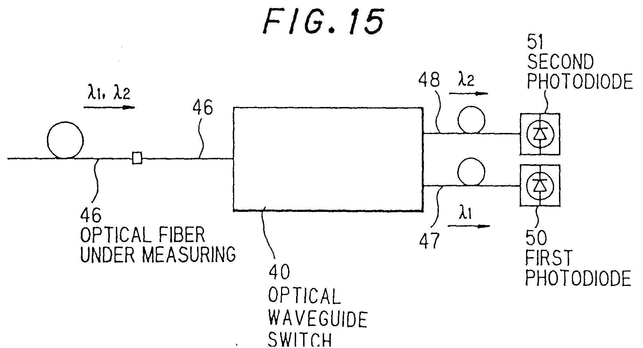

Next, a 2-wavelength type OTDR using the optical waveguide device 40 will be described in conjunction with Fig. 15. In the OTDR, an input of the optical waveguide switch 40 is connected to an optical fiber 46 under measurements through which light having a wavelength of λ₁ (=1.3 µm) or λ₂ (=1.55 µm) propagates. Two outputs of the switch 40 are connected to first and second photodiodes 50 and 51 through first and second output optical fibers 47 and 48.

In operation, either light of wavelength λ₁ (=1.3 µm) or light of wavelength λ₂ (=1.55 µm) is irradiated from a laser diode (not shown) to the optical fiber 46 under measurement. The light which is returned back is supplied to the optical waveguide device 40. The light is switched so as to be supplied to the first photodiode 50 if the wavelength thereof is 1.3 µm and to the second photodiode 51 if the wavelength thereof is 1.55 µm by setting the voltages applied to the switching elements as explained before.

Although the invention has been described with respect to specific embodiments for complete and clear disclosure, the appended claims are not to be thus limited and include alternative constructions that may occur to one skilled in the art which fairly fall within the basic teaching herein set forth.

## Claims

1. An optical waveguide device, comprising:
first and second optical directional coupler switches (22,23,24,25,42,43,44,45) provided on a substrate (21,41), each switch comprising a pair of parallel waveguides and electrode means for applying a voltage across the waveguides;
the waveguides of the first and second switches being provided by diffusing into the substrate films of the same thickness deposited in a predetermined pattern on the substrate under predetermined diffusing conditions; and,
the widths of the waveguides, the coupling lengths, and the distances between the waveguides in the first and second switches being predetermined in each switch so that the first switch operates on light of a first wavelength, λ₁, independently of its polarisation and the second switch operates on light of a second wavelength, λ₂, independently of its polarisation.

2. An optical waveguide device, according to claim 1, wherein:
each optical directional coupler switch includes two serially connected optical directional coupler switches.

3. An optical waveguide device, according to claim 1, further comprising:
means (34) for dividing a wavelength multiplexed light signal into at least two light signals having said first and second predetermined wavelengths, said dividing means being positioned on a light input side of said first and second optical directional coupler switches.

4. An optical waveguide device, according to claim 3, wherein:
said dividing means functions as an optical divider for light signals of said first and second predetermined wavelengths and, on application of a predetermined voltage to electrode means of said dividing means, as an optical directional coupler switch for light signals of one of said first and second predetermined wavelengths.

5. An optical waveguide device, according to any preceding claim, wherein the first optical directional coupler switch operates for light of the first wavelength λ₁ without dependency on TE and TM polarisation modes and the second optical directional coupler switch operates for light of the second wavelength λ₂ without dependency on TE and TM polarisation modes, and the device comprises a wavelength selection means for directing light of the first and second wavelengths from a common input for switching by the first and second optical directional coupler switches respectively.

6. An optical waveguide device according to claim 5, in which the first optical directional coupler switch includes two serially connected switching elements (42; 45), and the wavelength selecting means comprises the upstream switching element (42).

7. An optical waveguide device according to any preceding claim, wherein λ₁ = 1.3µm, λ₂ = 1.55 µm, and W₁/W₂ is greater than about 0.91 λ₁/λ₂ and less than about 0.94 λ₁/λ₂, where W₁ is the waveguide width of said first optical directional coupler switch, and W₂ is the waveguide width of said second optical directional coupler switch.

8. An optical waveguide device according to any preceding claim, wherein said wavelengths λ₁ and λ₂ are 1.3 µm and 1.55 µm respectively, and said waveguide widths W₁ and W₂ are 9µm and 11.5µm respectively.

9. An optical waveguide device according to any preceding claim, wherein:
said first and second optical directional coupler switches are connected by an optical filter element (42) formed on said substrate so that when light of first and second wavelengths are received by the device at a common input (46), said light of a first wavelength is separated from said light of a second wavelength.

## Patentansprüche

1. Optische Wellenleitervorrichtung mit:
einem ersten und zweiten optischen Richtungskopplerschalter (22, 23, 24, 25, 42, 43, 44, 45), die auf einem Substrat (21, 41) vorgesehen sind, wobei jeder Schalter ein Paar parallele Wellenleiter sowie Elektrodeneinrichtungen zum Anlegen einer Spannung über den Wellenleitern aufweist;
wobei die Wellenleiter des ersten und zweiten Schalters durch Diffusion in die Substratfilme der gleichen Dicke vorgesehen sind, die in einem vorbestimmten Muster auf dem Substrat unter vorbestimmten Diffusionsbedingungen aufgebracht sind; und
wobei die Breiten der Wellenleiter, die Koppellängen und die Abstände zwischen den Wellenleitern in dem ersten und zweiten Schalter in jedem Schalter so vorbestimmt sind, daß der erste Schalter mit Licht einer ersten Wellenlänge λ₁ unabhängig von dessen Polarisation arbeitet, und der zweite Schalter mit Licht einer zweiten Wellenlänge λ₂ unabhängig von dessen Polarisation arbeitet.

2. Optische Wellenleitervorrichtung nach Anspruch 1, worin: jeder optische Richtungskopplerschalter zwei in Reihe verbundene optische Richtungskopplerschalter aufweist.

3. Optische Wellenleitervorrichtung nach Anspruch 1, ferner mit:
einer Einrichtung (34) zum Aufteilen eines im Wellenlängenmultiplex behandelten Lichtsignals in mindestens zwei Lichtsignale mit der ersten und zweiten vorbestimmten Wellenlänge, wobei die Aufteilungseinrichtung an einer Lichteingangsseite des ersten und zweiten optischen Richtungskopplerschalters angeordnet ist.

4. Optische Wellenleitervorrichtung nach Anspruch 3, worin: die Aufteilungseinrichtung als optischer Teiler für Lichtsignale der ersten und zweiten vorbestimmten Wellenlänge sowie nach Anlegen einer vorbestimmten Spannung an Elektrodeneinrichtungen der Aufteilungseinrichtung als optischer Richtungskopplerschalter für Lichtsignale der ersten oder zweiten vorbestimmten Wellenlänge dient.

5. Optische Wellenleitervorrichtung nach einem der vorhergehenden Ansprüche, worin der erste optische Richtungskopplerschalter für Licht der ersten Wellenlänge λ₁ ohne Abhängigkeit von TE- und TM-Polarisationsmoden arbeitet und der zweite optische Richtungskopplerschalter für Licht der zweiten Wellenlänge λ₂ ohne Abhängigkeit von TE- und TM-Polarisationsmoden arbeitet, und die Vorrichtung eine Wellenlängen-Auswahleinrichtung zum Leiten von Licht der ersten und zweiten Wellenlänge von einem gemeinsamen Eingang zum Schalten durch den ersten bzw. zweiten optischen Richtungskopplerschalter aufweist.

6. Optische Wellenleitervorrichtung nach Anspruch 5, in der der erste optische Richtungskopplerschalter zwei in Reihe verbundene Schaltelemente (42; 45) aufweist und die Wellenlängen-Auswahleinrichtung das vorgeschaltete Schaltelement (42) aufweist.

7. Optische Wellenleitervorrichtung nach einem der vorhergegangenen Ansprüche, worin λ₁ = 1,3 µm, λ₂ = 1,55 µm und W₁/W₂ größer als etwa 0,91 λ₁/λ₂ und kleiner als etwa 0,94 λ₁/λ₂ ist, worin W₁ die Wellenleiterbreite des ersten optischen Richtungskopplerschalters und W₂ die Wellenleiterbreite des zweiten optischen Richtungskopplerschalters ist.

8. Optische Wellenleitervorrichtung nach einem der vorhergegangenen Ansprüche, worin die Wellenlängen λ₁ und λ₂ 1,3 µm bzw. 1,55 µm und die Wellenleiterbreiten W₁ und W₂ 9 µm bzw. 11,5 µm betragen.

9. Optische Wellenleitervorrichtung nach einem der vorhergegangenen Ansprüche, worin:
der erste und zweite optische Richtungskopplerschalter durch ein auf dem Substrat ausgebildetes optisches Filterelement (42) so verbunden sind, daß bei Empfang von Licht einer ersten und zweiten Wellenlänge durch die Vorrichtung an einem gemeinsamen Eingang (46) das Licht einer ersten Wellenlänge von dem Licht einer zweiten Wellenlänge getrennt wird.

## Revendications

1. Dispositif de guide d'onde optique, comprenant:
des premier et deuxième commutateurs à coupleur directionnel optique (22, 23, 24, 25, 42, 43, 44, 45) réalisés sur un substrat (21, 41), chaque commutateur comprenant une paire de guides d'onde parallèles et de moyens d'électrodes pour appliquer une tension en travers des guides d'onde ;
les guides d'onde des premier et deuxième commutateurs étant réalisés par diffusion dans les films de substrat de la même épaisseur déposés selon un motif prédéterminé sur le substrat, dans des conditions de diffusion prédéterminées ; et,
les largeurs des guides d'onde, les longueurs de couplage, et les distances entre les guides d'onde des premier et deuxième commutateurs étant prédéterminées dans chaque commutateur de sorte que le premier commutateur fonctionne sur une lumière de première longueur d'onde λ₁, indépendamment de sa polarisation, et que le deuxième commutateur fonctionne sur une lumière de deuxième longueur d'onde λ₂, indépendamment de sa polarisation.

2. Dispositif de guide d'onde optique selon la revendication 1, dans lequel:
chaque commutateur de coupleur directionnel optique comprend deux commutateurs de coupleur directionnel optique connectés en série.

3. Dispositif de guide d'onde optique selon la revendication 1, comprenant en outre :
des moyens (34) pour diviser un signal lumineux multiplexé en longueur d'onde en, au moins, deux signaux lumineux ayant lesdites première et deuxième longueurs d'onde prédéterminées, lesdits moyens de division étant positionnés sur un côté d'entrée de lumière desdits premier et deuxième commutateurs de coupleur directionnel optique.

4. Dispositif de guide d'onde optique selon la revendication 3, dans lequel
lesdits moyens de division fonctionnent en tant que diviseur optique pour des signaux lumineux desdites première et deuxième longueurs d'onde prédéterminées et, lors de l'application d'une tension prédéterminée aux moyens d'électrodes desdits moyens de division, en tant que commutateur de coupleur directionnel optique pour des signaux lumineux d'une desdites première et deuxième longueurs d'onde prédéterminées.

5. Dispositif de guide d'onde optique selon l'une quelconque des revendications précédentes, dans lequel le premier commutateur de coupleur directionnel optique fonctionne pour la lumière de première longueur d'onde λ₁ sans dépendre des modes de polarisation TE et TM, et le deuxième commutateur de coupleur directionnel optique fonctionne pour la lumière de deuxième longueur d'onde λ₂ sans dépendre des modes de polarisation TE et TM, et le dispositif comprend des moyens de sélection de longueurs d'onde pour diriger les lumières de première et de deuxième longueurs d'onde provenant d'une entrée commune pour commuter grâce aux premier et deuxième commutateurs de coupleur directionnel optique respectivement.

6. Dispositif de guide d'onde optique selon la revendication 5, dans lequel le premier commutateur de coupleur directionnel optique comprend deux éléments de commutation (42 ; 45) connectés en série et les moyens de sélection de longueurs d'onde comprennent l'élément de commutation (42) d'amont.

7. Dispositif de guide d'onde optique selon l'une quelconque des revendications précédentes, dans lequel λ₁ = 1,3µm, λ₂ = 1,55 µm, et W₁/W₂ est supérieur à environ 0,91 λ₁/λ₂ et inférieur à environ 0,94 λ₁/λ₂, où W₁ est la largeur de guide d'onde dudit premier commutateur de coupleur directionnel optique, et W₂ est la largeur de guide d'onde dudit deuxième commutateur de coupleur directionnel optique.

8. Dispositif de guide d'onde optique selon l'une quelconque des revendications précédentes, dans lequel lesdites longueurs d'onde λ₁ et λ₂ valent respectivement 1,3 µm et 1,55 µm, et lesdites largeurs de guide d'onde W₁ et W₂ valent respectivement 9 µm et 11,5 µm.

9. Dispositif de guide d'onde optique selon l'une quelconque des revendications précédentes, dans lequel :
lesdits premier et deuxième commutateurs de coupleur directionnel optique sont reliés par un élément de filtre optique (42) formé sur ledit substrat de sorte que, lorsque les lumières de première et de deuxième longueurs d'onde sont reçues par le dispositif à une entrée commune (46), ladite lumière de première longueur d'onde est séparée de ladite lumière de deuxième longueur d'onde.
